# EUROPEAN PATENT SPECIFICATION

(11) **EP 2 325 074 B1**
(45) Date of publication and mention of the grant of the patent: **16.05.2012**
(21) Application number: 09176853.1
(22) Date of filing: 24.11.2009
(51) Int. Cl.: B62K 21/06

(54) **Cap assembly for threadless bicycle headset**
Verschlussanordnung für einen gewindelosen Fahrradsteuersatz
Ensemble de casquette pour écouteurs de bicyclette sans fil

(43) Date of publication of application: 25.05.2011
(73) Proprietor: VP Components Co., Ltd., Taiwan (TW)
(72) Inventor: Lin, Wen-Hwa, Taichung Hsien (TW)
(74) Representative: Viering, Jentschura & Partner

(56) References cited:
- EP-A1- 2 003 049
- DE-A1- 19 630 464
- US-A1- 2003 121 357
- US-B1- 6 332 735

## Description

### BACKGROUND OF THE INVENTION

### 1. Technical Field

The present invention relates to a cap assembly according to Claim 1. Accordingly, the present invention severally relates to bicycle cap assemblies and more particularly, to a cap assembly that combines a cap, a fastener and a seal ring of a conventional headset as an integrated assembly.

### 2. Description of Related Art

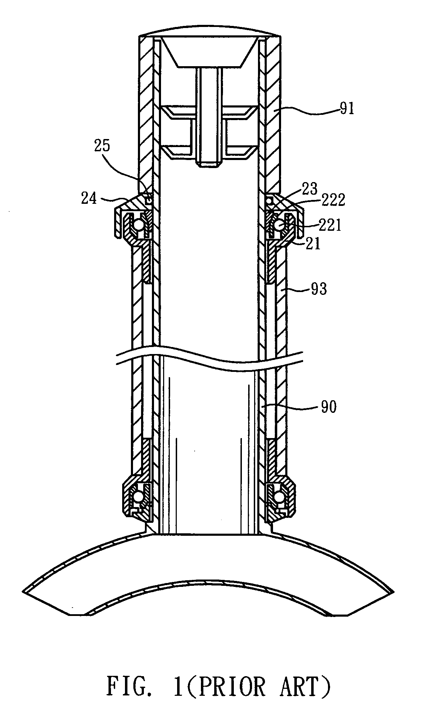

**Figure 1** depicts an upper bearing of a conventional headset. The upper bearing includes a cup **21,** a ball retainer **221,** a race **222,** a fastener **23** and a cap **24.** The cup **21** is coupled with an upper end of a head tube **93.** The ball retainer **221** is set in the cup **21.** The race **222** is deposited on the ball retainer **221.** A steerer **90** passes inside the head tube **93.** The fastener **23** is mounted around the steerer **90** and abuts upon an inner wall of the race **222.** The cap **24** is mounted around the steerer **90** and, with the presence of an assembled stem **91,** presses downward against the fastener **23** so that the fastener **23** firmly positions the race **222** and the ball retainer **221,** and in turn makes the steerer **90** firmly held, thereby positioning the entire upper bearing and tubes. A rubber ring **25** is provided at an inner wall of the cap **24** for closely fitting with an outer wall of the steerer 90 as an oil seal.

To assemble the above upper bearing, at least the following steps have to be manually performed:
In the first step, placing the cup **21** on the upper end of the head tube **93;**
In the second step, putting the ball retainer **221** in the cup **21;**
In the third step, assembling the race **222** to the ball retainer **221;**
In the fourth step, mounting the fastener **23** on the race **222;**
In the fifth step, coupling the rubber ring **25** with the cap **24;**
In the sixth step, covering the cap **24** on the fastener **23;** and
In the seventh step, by fixing the stem **91,** pressing the cap **24** downward to press against the fastener **23,** so that the fastener **23** comes to position the race **222** and the ball retainer **221,** thereby firmly holding the steerer **90.**

From the above description, it is obvious that each of the individual components composing the conventional upper bearing requires an individual step to install it, causing the entire assembling process complex, labor-consuming and time-consuming.

Document US6332735, which is considered as the closest prior art, discloses a cap assembly, being used with a threadless bicycle headset and comprising a fastener composed of a plurality of fastening petals arranged as a circle; and an outer cap integratedly combined with an exterior of the fastener.

### SUMMARY OF THE INVENTION

In view of the defects of a conventional upper bearing due to its numerous components, the present invention herein provides an integrated cap assembly for a threadless bicycle headset, wherein the cap assembly helps to reduce the number of components in an upper bearing, thereby simplifying and abridging the assembling process, while the stability of the resultant structure is also improved.

To achieve these and other objects of the present invention, the invention provides a cap assembly according to claim 1. Further embodiments of the invention are described in the dependent claims.

### BRIEF DESCRIPTION OF THE DRAWINGS

The invention as well as a preferred mode of use, further objectives and advantages thereof will be best understood by reference to the following detailed description of an illustrative embodiment when read in conjunction with the accompanying drawing, wherein:
**Figure 1** depicts a conventional upper bearing for a bicycle headset;
**Figure 2** is a perspective view of a cap assembly of the present invention taken from a first visual angle;
**Figure 3** is another perspective view of the cap assembly of the present invention taken from a second visual angle;
**Figure 4** is a cross-section view of the cap assembly of the present invention;
**Figure 5** is a schematic view illustrating the cap assembly of the present invention assembled to a bicycle headset; and
**Figure 6** is a cross-sectional view of the disclosed cap and the bicycle headset assembled together.

### DETAILED DESCRIPTION OF THE PREFERRED EMBODIMENT

While a preferred embodiment provided hereinafter for illustrating the concept of the present invention as described above, it is to be understood that the components of the embodiment shown in the accompanying drawings are depicted for the sake of easy explanation and need not to be made in scale. Besides, like numerals are used throughout this description to describe similar or identical parts, unless otherwise indicated.

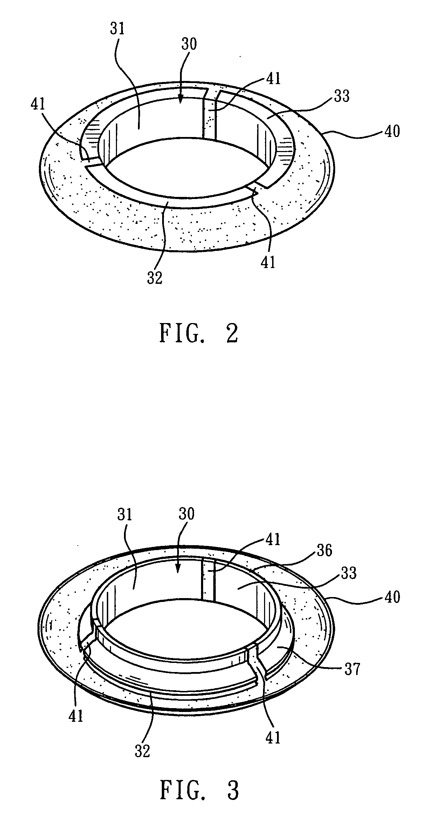

Referring to **Figures 2** and **3****,** a cap assembly of the present invention includes a fastener **30** and an outer cap **40** integratedly combined with an exterior of the fastener **30.**

The fastener **30** is composed of a plurality of separate fastening petals **31, 32, 33** arranged as a circle. The outer cap **40** is molded with a rubber material and connects with upper curved edges of the fastening petals **31, 32, 33.** The outer cap **40** further has a plurality of connecting ribs **41** protruding centripetally, and each of the connecting ribs **41** is configured to be flanked by two adjacent said fastening petals **31, 32, 33,** so as to associate the separate fastening petals **31, 32, 33.**

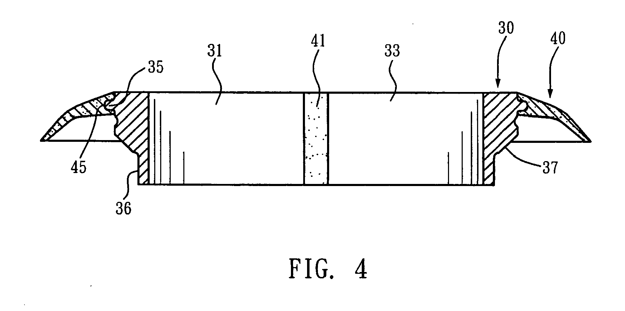

As shown in **Figures 3** and **4****,** the outer cap **40** and the fastener **30** may be provided at borders therebetween with a retaining groove **45** and a flange **35** that are configured to engage with each other, so as to ensure the combination between the outer cap **40** and the fastener **30,** and provide a watertight function. The fastener **30** has a fastening segment **36** extending axially downward from a bottom of the outer cap **40.** A sloping lower pressing surface 37 is formed at an outer wall of the fastening segment 36.

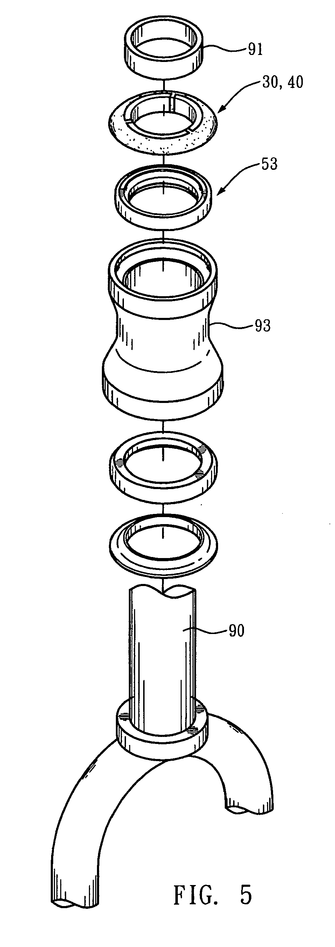

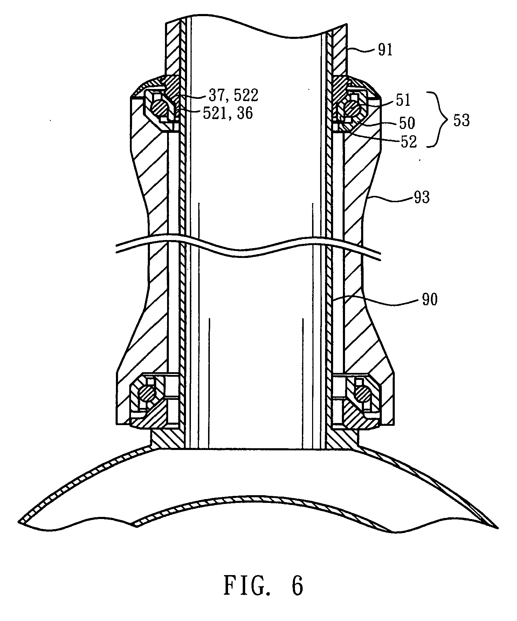

**Figures 5** and **6** show the cap assembly of the present invention assembled with a bicycle upper bearing. The upper bearing includes the conventional cup **50,** ball retainer **51** and race **52.** In the present embodiment, the cup **50,** ball retainer **51** and race **52** are pre-fabricated as a bearing unit **53.** The bearing unit **53** is mounted on an upper end of a bicycle head tube **93** that further receives a steerer **90** passing therein. The cap assembly of the present invention is then mounted around the steerer **90** to be set on the race **52** of the bearing unit **53.** An outer surface of the fastening segment **36** thus comes into contact with a vertical inner periphery **521** of the race **52,** while the sloping lower pressing surface **37** comes into contact with an upper pressing surface **522** of the race **52** sloping complementarily. The outer cap **40** thus covers over the entire top of the cup **50.** A stem 91 then sleeves an upper portion of the steerer **90** and presses downward to retain the cap assembly, so that the cap assembly firmly positions the bearing unit **53** and thereby holds the steerer **90** tight.

The assembling process of an upper bearing with the disclosed the cap assembly undergoes the following steps:
In the first step, assembling the bearing unit **53** with the upper end of the head tube **93;**
In the second step, mounting the cap assembly on the bearing unit **53;** and
In the third step, by fixing the stem **91,** pressing the cap assembly downward, so as to make the fastener **30** firmly position the race **52** and the ball retainer **51,** thereby holding the steerer **90** tight.

Thus, as compared with a conventional upper bearing, the present invention reduces four assembling steps in the assembling process. By simplifying the components in the upper bearing, the cap assembly of the present invention substantially lessens the assembling work of the novel upper bearing, thus realizing a more convenient, economic and rapid assembling process.

When the cap assembly of the present invention is positioned by the stem 91, the contacting upper pressing surface **522** of the race **52** and the lower pressing surface **37** of the fastener **30** jointly force the fastening petals **31, 32, 33** of the fastener **30** to converge centripetally, and to compress the rubber connecting ribs **41** positioned therebetween. Since the connecting ribs **41** are flanked by two adjacent said fastening petals **31, 32, 33,** they are spaced equidistantly along the circular periphery of the fastener **30.** At this time, the connecting ribs **41** and the outer cap **40,** both made of the rubber material, ensure the fastening petals **31, 32, 33** to equally move when they converge centripetally, so that the fastener **30** can generate a centripetal compressing force to not only hold the steerer **90** tight but also make the steerer **90** positioned centrally.

Briefly, the cap assembly of the present invention combines the fastener, the cap, and the seal ring in the cap of the conventional upper bearing into a pre-fabricated integrated assembly. Thereby, a single assembling step can position the seal ring, the fastener and the cap at the same time, and achieve the multiple functions of fastening the steerer, centralizing the steerer, posing the upper bearing watertight and dustproof, positioning the ball retainer as well as the race, and improving the stability of the overall structure.

The present invention has been described with reference to the preferred embodiment and it is understood that the embodiment is not intended to limit the scope of the present invention.

## Claims

1. A cap assembly, being used with a threadless bicycle headset comprising:
a fastener (30) being composed of a plurality of separate fastening petals (31, 32, 33) arranged as a circle; and
an outer cap (40) molded with a rubber material and being integratedly combined with an exterior of the fastener (30), wherein the outer cap connects with upper curved edges of the fastening petals (31, 32, 33), wherein the outer cap (40) has a plurality of connecting ribs (41) protruding centripetally, and each of the connecting ribs (41) is configured to be flanked by two adjacent said fastening petals (31, 32, 33), so as to associate the separate fastening petals (31, 32, 33).

2. The cap assembly as claimed in Claim **1,** wherein the outer cap (40) and the fastener (30) are provided at borders therebetween with a retaining groove (45) and a flange (35) that are configured to engage with each other.

3. The cap assembly as claimed in Claim **1,** wherein the fastener (30) has a fastening segment (36) extending axially downward from a bottom of the outer cap (40).

4. The cap assembly as claimed in Claim **3,** wherein the fastening segment (36) has a sloping lower pressing surface (37).

## Patentansprüche

1. Eine Verschlussanordnung, welche mit einem gewindelosen Fahrradsteuersatz verwendet wird, umfasst:
ein Verbindungselement (30), welches aus einer Vielzahl von voneinander getrennten Befestigungsblättern (31, 32, 33) ausgebildet ist, welche kreisförmig angeordnet sind; und
eine Außenkappe (40), welche aus einem Gummimaterial ausgeformt ist und mit einer Außenfläche des Verbindungselementes (30) eingefügt verbunden ist, wobei die Außenkappe mit nach oben gebogenen Rändern der Befestigungsblätter (31, 32, 33) verbunden ist, wobei die Außenkappe (40) eine Vielzahl von Verbindungsrippen (41), welche zentripetal hervorstehen, aufweist, und jede der Verbindungsrippen (41) derart ausgebildet ist, dass sie durch zwei angrenzende Befestigungsblätter (31, 32, 33) flankiert sind, so dass diese die voneinander getrennten Befestigungsblätter (31, 32, 33) verbinden.

2. Die Verschlussanordnung nach Anspruch 1, wobei die Außenkappe (40) und das Verbindungselement (30) an dazwischenliegenden Rändern eine Haltenut (45) und einen Flansch (35) aufweisen, welche derart ausgebildet sind, dass sie ineinandergreifen.

3. Die Verschlussanordnung nach Anspruch 1, wobei das Verbindungselement (30) ein Befestigungssegment (36) aufweist, welches sich von einem Boden der Außenkappe (40) axial nach unten erstreckt.

4. Die Verschlussanordnung nach Anspruch 3, wobei das Befestigungssegment (36) eine schräg ausgebildete, untere Druckfläche (37) aufweist.

## Revendications

1. Ensemble de capuchon, étant utilisé avec un jeu de direction de bicyclette sans filetage, comprenant :
- un élément de fixation (30) étant composé d'une pluralité de pétales de fixation (31, 32, 33) séparés agencés sous la forme d'un cercle ; et
- un capuchon externe (40) moulé avec une matière de caoutchouc et étant combiné de façon intégrée à un extérieur de l'élément de fixation (30), dans lequel le capuchon externe est relié aux bords incurvés supérieurs des pétales de fixation (31, 32, 33), dans lequel le capuchon externe (40) a une pluralité de nervures de connexion (41) en saillie de façon centripète, et chacune des nervures de connexion (41) est configurée pour être encadrée par deux pétales adjacents desdits pétales de fixation (31, 32, 33), de façon à associer les pétales de fixation (31, 32, 33) séparés.

2. Ensemble de capuchon selon la revendication 1, dans lequel le capuchon externe (40) et l'élément de fixation (30) sont dotés, à des bordures entre eux, d'une rainure de retenue (45) et d'une bride (35) qui sont configurées pour s'engager l'une avec l'autre.

3. Ensemble de capuchon selon la revendication 1, dans lequel l'élément de fixation (30) a un segment de fixation (36) s'étendant axialement vers le bas depuis une partie inférieure du capuchon externe (40).

4. Ensemble de capuchon selon la revendication 3, dans lequel le segment de fixation (36) a une surface de pression inférieure inclinée (37).
